# EUROPEAN PATENT APPLICATION

(11) **EP 4 567 617 A1**
(43) Date of publication of application: **11.06.2025**
(21) Application number: 24830418.0
(22) Date of filing: 04.06.2024
(51) Int. Cl.: G06F 15/163

(54) **DATA TRANSMISSION METHOD FOR CHIPLET INTERCONNECTION INTERFACE, AND CHIPLET INTERCONNECTION INTERFACE**

(30) Priority: 30.06.2023 CN 202310802966
(71) Applicant: Hygon Information Technology Co., Ltd., Tianjin 300392 (CN)
(72) Inventor: LIANG, Yan, Tianjin 300392 (CN)
(74) Representative: Maiwald GmbH
(86) International application number: PCT/CN2024/097274
(87) International publication number: WO 2025/001771

(57) **Abstract**

Embodiments of the present disclosure provide a data transmission method for a chiplet interconnection interface, and a chiplet interconnection interface. The data transmission method is applied to a receiving end. The method comprises: receiving N data signals and a first clock signal, wherein the number of periods of the first clock signal is limited, the number of periods of each data signal among the N data signals is less than or equal to that of the first clock signal, and N is a positive integer; and on the basis of the first clock signal, positioning a starting position of data among the N data signals, and obtaining the data among the N data signals. According to the embodiments of the present disclosure, a receiving end uses a first clock signal to obtain data among data signals, and does not use an effective flag bit, so that clock and data alignment training does not need to be performed in advance, and real-time alignment can also be realized.

## Description

The present application claims the priority and benefits of Chinese Patent Application No. 202310802966.6, filed on June 30, 2023, which is incorporated herein by reference in its entirety as part of the present application.

### TECHNICAL FIELD

Embodiments of the present disclosure relate to a method for data transmission, a transmitting end, a receiving end, a chiplet interconnect interface, a chip, and an electronic device.

### BACKGROUND

Chiplet is a unit chip with a specific function and includes an in-package interconnect interface, which is latest development in chip design technology. Chiplet technology can not only reduce cost but also improve performance of the chip by using multiple chiplets to realize chip design.

Chiplet interconnections naturally become an important factor affecting chip performance. Currently, there are two ways which are serial bus and parallel bus to realize chiplet interconnection, and parallel bus interconnect is mainstream nowadays. The parallel bus can give a shorter delay between two chiplets, and can also expand bandwidth between chiplets by increasing bandwidth of the bus.

After physical interconnections are realized, chiplet interconnection also needs to complete a data link training, in which a clock and data alignment is an essential part of data transmission. However, the clock and data alignment is part of the data link training, and when clock and data are not aligned after the training is completed, the data link needs to be completely trained again, which seriously affects normal work of the chip.

### SUMMARY

Embodiments of the present disclosure provide a method for data transmission, a transmitting end, a receiving end, a chiplet interconnect interface, a chip, and an electronic device.

**In** a first aspect, at least one embodiment of the present disclosure provides a method for data transmission, applied to a receiving end, and the method includes: receiving N data signals and a first clock signal, in which the number of cycles of the first clock signal is finite, the number of cycles of each data signal of the N data signals is less than or equal to the number of cycles of the first clock signal, and N is a positive integer; and locating a start position of data in the N data signals and obtaining the data in the N data signals, according to the first clock signal.

For example, in a method provided by an embodiment of the present disclosure, the locating a start position of data in the N data signals and obtaining the data in the N data signals, according to the first clock signal, includes: obtaining N second clock signals according to the first clock signal, in which the N second clock signals correspond to the N data signals respectively; and respectively locating a start position of data in each data signal of the N data signals, and respectively converting the data in the N data signals from serial data to parallel data, according to the N second clock signals, in which each second clock signal of the N second clock signals has the same number of cycles as the first clock signal.

For example, in a method provided by an embodiment of the present disclosure, after obtaining data in the N data signals, the method further includes: storing the data in the N data signals to a buffer memory according to the N second clock signals, correspondingly.

For example, in a method provided by an embodiment of the present disclosure, the method further includes: reading the data in the N data signals from the buffer memory according to a third clock signal, in which the third clock signal is a local clock signal of the receiving end.

For example, in a method provided by an embodiment of the present disclosure, the reading the data in the N data signals from the buffer memory according to a third clock signal, includes: accessing a read pointer of the buffer memory to read the data in the N data signals according to the third clock signal.

For example, in a method provided by an embodiment of the present disclosure, the storing the data in the N data signals to a buffer memory according to the N second clock signals, correspondingly, includes: accessing a write pointer of the buffer memory to store the data in the N data signals to the buffer memory, respectively, according to the N second clock signals.

For example, in a method provided by an embodiment of the present disclosure, the method further includes: stopping reading from the buffer memory after at least one null data has been read from the buffer memory.

For example, in a method provided by an embodiment of the present disclosure, the number of cycles of each data signal of the N data signals is M, the number of cycles of the first clock signal is M+X, M is an integer greater than or equal to 2, and X is an integer greater than or equal to 0.

In a second aspect, at least one embodiment of the present disclosure provides a method for data transmission, applied to a transmitting end, the method includes: transmitting N data signals and a first clock signal, in which N is a positive integer, the number of cycles of the first clock signal is finite, the number of cycles of each data signal of the N data signals is less than or equal to the number of cycles of the first clock signal, and the first clock signal is used to locate a start position of data in the N data signals and to obtain the data in the N data signals.

For example, in a method provided by an embodiment of the present disclosure, the transmitting the N data signals and the first clock signal, includes: transmitting the N data signals and the first clock signal simultaneously; or, transmitting the first clock signal first, and then transmitting the N data signals after a preset interval.

For example, in a method provided by an embodiment of the present disclosure, the method further includes: stopping transmitting the first clock signal when or after the N data signals stop being transmitted.

For example, in a method provided by an embodiment of the present disclosure, the number of cycles of each data signal of the N data signals is M, the number of cycles of the first clock signal is M+X, where M is an integer greater than or equal to 2, and X is an integer greater than or equal to 0.

**In** a third aspect, at least one embodiment of the present disclosure provides a receiving end, applied to a chiplet interconnect interface, and the receiving end includes: N data ports, configured to receive N data signals, in which N is a positive integer; a clock port, configured to receive a first clock signal, in which the number of cycles of the first clock signal is finite, and the number of cycles of each data signal of the N data signals is less than or equal to the number of cycles of the first clock signal; and a data processing module, connected to the N data ports and the clock port, configured to locate a start position of data in the N data signals and obtain data in the N data signals according to the first clock signal.

For example, in a receiving end provided by an embodiment of the present disclosure, the receiving end further includes: a clock acquisition module, connected to the clock port and the data processing module, configured to obtain N second clock signals according to the first clock signal, and transmit the N second clock signals to the data processing module; and the data processing module is configured to convert the data in the N data signals from serial data to parallel data, respectively, according to the N second clock signals, in which each second clock signal of the N second clock signals has the same number of cycles as the first clock signal.

For example, in a receiving end provided by an embodiment of the present disclosure, the receiving end further includes: a buffer memory, connected to the data processing module, configured to store the data in the N data signals.

For example, in a receiving end provided by an embodiment of the present disclosure, the data processing module is further configured to access a write pointer of the buffer memory to store the data in the N data signals to the buffer memory according to the N second clock signals.

For example, in a receiving end provided by an embodiment of the present disclosure, the receiving end further includes: a data reading module, connected to the buffer memory, configured to read out the data in the N data signals from the buffer memory according to a third clock signal, in which the third clock signal is a local clock signal of the receiving end.

For example, in a receiving end provided by an embodiment of the present disclosure, the data reading module is further configured to access a read pointer of the buffer memory to read the data in the N data signals according to the third clock signal.

For example, in a receiving end provided by an embodiment of the present disclosure, the data reading module is further configured to stop data reading from the buffer memory after at least one null data has been read from the buffer memory.

For example, in a receiving end provided by an embodiment of the present disclosure, the buffer memory is an asynchronous FIFO memory.

For example, in a receiving end provided by an embodiment of the present disclosure, the receiving end further includes: a local clock, configured to generate a local clock signal.

For example, in a receiving end provided by an embodiment of the present disclosure, the number of cycles of each data signal of the N data signals is M, the number of cycles of the first clock signal is M+X, where M is an integer greater than or equal to 2, and X is an integer greater than or equal to 0.

In a fourth aspect, at least one embodiment of the present disclosure provides a transmitting end, applied to a chiplet interconnect interface, and the transmitting end includes: N data ports, configured to correspondingly transmit N data signals, in which N is a positive integer; a clock port, configured to transmit a first clock signal; and a local clock, connected to the clock port and the N data ports, configured to generate the first clock signal, in which the number of cycles of the first clock signal is finite, the number of cycles of each data signal of the N data signals is less than or equal to the number of cycles of the first clock signal, and the first clock signal is used to locate a start position of data in the N data signals and to obtain the data in the N data signals.

For example, in a transmitting end provided by an embodiment of the present disclosure, the N data ports and the clock port are configured to transmit the N data signals and the first clock signal respectively and simultaneously; or, the clock port is configured to transmit the first clock signal first, and the N data ports are configured to transmit the N data signals after a preset interval after the first clock signal is transmitted.

For example, in a transmitting end provided by an embodiment of the present disclosure, the transmitting end further includes: a clock switch, connected to the local clock and to the clock port, configured to disconnect a connection between the local clock and the clock port when the N data signals stop being transmitted or after one cycle of stopping transmitting the N data signals.

For example, in a transmitting end provided by an embodiment of the present disclosure, the number of cycles of each data signal of the N data signals is M, the number of cycles of the first clock signal is M+X, M is an integer greater than or equal to 2, and X is an integer greater than or equal to 0.

In a fifth aspect, at least one embodiment of the present disclosure further provides a chiplet interconnect interface configured to execute any of the methods as described in the first aspect above.

In a sixth aspect, at least one embodiment of the present disclosure further provides a chiplet interconnect interface configured to execute any of the methods as described in the second aspect above.

In a seventh aspect, at least one embodiment of the present disclosure further provides a chiplet interconnect interface includes any of the receiving ends as described in the third aspect.

In an eighth aspect, at least one embodiment of the present disclosure further provides a chiplet interconnect interface includes any of the transmitting ends as described in the third aspect.

In a ninth aspect, at least one embodiment of the present disclosure further provides a chip, includes a plurality of chiplets, in which any two chiplets of the plurality of chiplets are connected via the chiplet interconnect interface as described in the fifth aspect or the seventh aspect and the chiplet interconnect interface as described in the sixth aspect or the eighth aspect.

In a tenth aspect, at least one embodiment of the present disclosure provides an electronic device, includes the chip as described in the ninth aspect.

### BRIEF DESCRIPTION OF DRAWINGS

In order to more clearly illustrate the technical solutions of the embodiments of the present disclosure, the accompanying drawings of the embodiments are briefly described below, and it is apparent that the accompanying drawings in the following description relate only to some of the embodiments of the present disclosure and are not a limitation of the present disclosure.
Fig. 1 illustrates a schematic diagram of a chiplet interconnect interface in the prior art;
Fig. 2 illustrates a schematic diagram of clock and data alignment between chiplets in the prior art;
Fig. 3 illustrates a flowchart of a method for data transmission provided by at least one embodiment of the present disclosure;
Fig. 4 illustrates a flowchart of another method for data transmission provided by at least one embodiment of the present disclosure;
Fig. 5 illustrates a schematic diagram of a receiving end provided by at least one embodiment of the present disclosure;
Fig. 6 illustrates a schematic diagram of a transmitting end provided by at least one embodiment of the present disclosure;
Fig. 7a illustrates a schematic diagram of a structure of a clock switch provided by at least one embodiment of the present disclosure;
Fig. 7b illustrates a schematic diagram of a first clock signal and a data signal provided by at least one embodiment of the present disclosure;
Fig. 7c illustrates another schematic diagram of a first clock signal and a data signal provided by at least one embodiment of the present disclosure;
Fig. 8 illustrates a schematic diagram of a chip provided by at least one embodiment of the present disclosure;
Fig. 9 illustrates a timing diagram of a method for data transmission after chiplet interconnection provided by at least one embodiment of the present disclosure; and
Fig. 10 illustrates a schematic diagram of an electronic device provided by at least one embodiment of the present disclosure.

### DETAILED DESCRIPTION

In order to make objects, technical solutions, and advantages of the embodiments of the present disclosure clearer, the technical solutions of the embodiments of the present disclosure are described clearly and completely in the following in conjunction with the accompanying drawings of the embodiments of the present disclosure. Obviously, the described embodiments are a part of the embodiments of the present disclosure and not all of the embodiments. Based on the described embodiments of the present disclosure, all other embodiments obtained by a person of ordinary skill in the art without the need for creative labor fall within the scope of protection of the present disclosure.

Unless otherwise defined, technical or scientific terms used in the present disclosure shall have the ordinary meaning understood by a person of ordinary skill in the art to which the present disclosure belongs. The terms "first", "second", and the like as used in the present disclosure do not denote any order, number, or importance, but are merely used to distinguish different components. Similarly, words such as "a," "one," or "the" and similar words do not indicate a limitation in number, but rather the presence of at least one. Similar words such as "include" or "contain" mean that the component or object preceded by the word encompasses and is equivalent to the component or object enumerated after the word and does not exclude other components or objects. Words such as "connected" or "linked" are not limited to physical or mechanical connections, but may include electrical connections, whether direct or indirect. The words "up", "down", "left", "right", etc. are used only to indicate relative positional relationships. When the absolute position of the described object is changed, the relative position relation may also be changed accordingly.

A training of a data link is usually carried out after an initialization of a chiplet, which requires the chiplet on a transmitting side and the chiplet on a receiving side to collaborate so that the chiplet on the receiving side can find a most suitable data sampling window. A training of a complete data link includes several parts, such as bias offset calibration, reference power Verf calibration, data path deskew, Clock and Data Alignment (CDA), parallel data reordering and data checking etc.. Clock and data alignment is the process of adjusting the phase between the data and the clock to ultimately obtain the proper sampling phase.

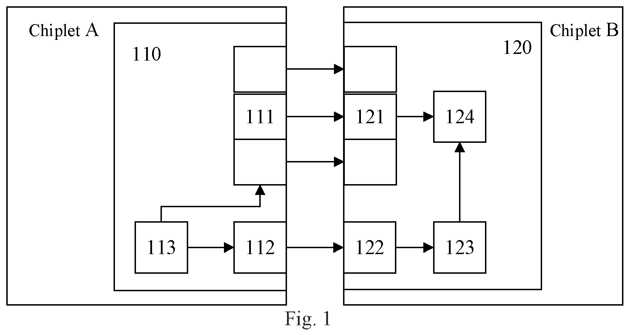

Fig. 1 illustrates a schematic diagram of a chiplet interconnect interface in the prior art.

In Fig. 1, chiplet A and chiplet B are connected via chiplet interconnect interface 110 and chiplet interconnect interface 120. Chiplet A is the transmitting side and chiplet B is the receiving side. The chiplet interconnect interface 110 includes a plurality of data ports 111, a clock port 112, and a local clock 113. The chiplet interconnect interface 120 includes a plurality of data ports 121, a clock port 122, a clock receiving module 123, and a data sampling module 124. The plurality of data ports 111 and the plurality of data ports 121 have equal numbers of data ports, which are connected via a plurality of data paths, respectively. The clock port 112 is connected to the clock port 122 via a clock path. The local clock 113 generates a clock signal and transmits the clock signal to the plurality of data ports 111 and the clock port 112. The clock receiving module 123 receives the clock signal generated by the local clock 113 and adjusts the clock signal, and transmits the clock signal after adjustment to the data sampling module 124. The data sampling module 124 utilizes the clock signal for data sampling. The clock signal may be a differential clock signal. The clock signal and the data signal are continuously transmitted to the chiplet B. The data signal carries valid data and null data, i.e., the data signal carries not all valid data. The valid data is what the chiplet A wishes to transmit to the chiplet B. The chiplet A transmits the valid data in accordance with a predetermined data format, length of the valid data transmitted at each time is limited. The valid data is not transmitted continuously from one to the other, and there are some time gaps between them; and the null data is used to fill the gap between the valid data. Therefore, data transmission between chiplet A and chiplet B may result in data misalignment between multiple data channels. In the prior art, pre-training of clock and data alignment is required so that accurate data can be received.

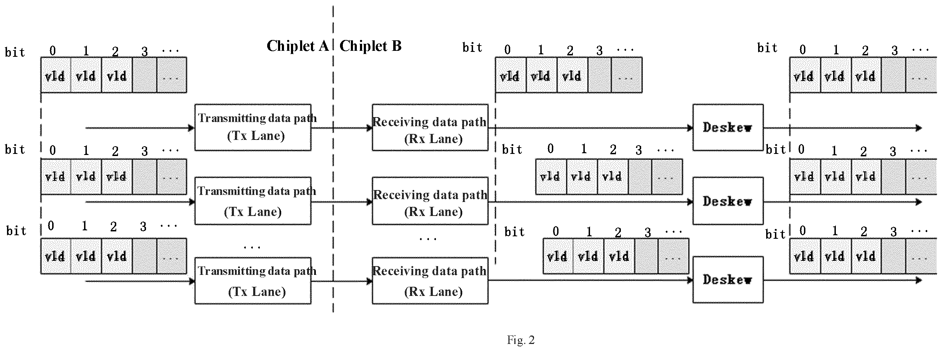

Fig. 2 illustrates a schematic diagram of clock and data alignment between chiplets in the prior art.

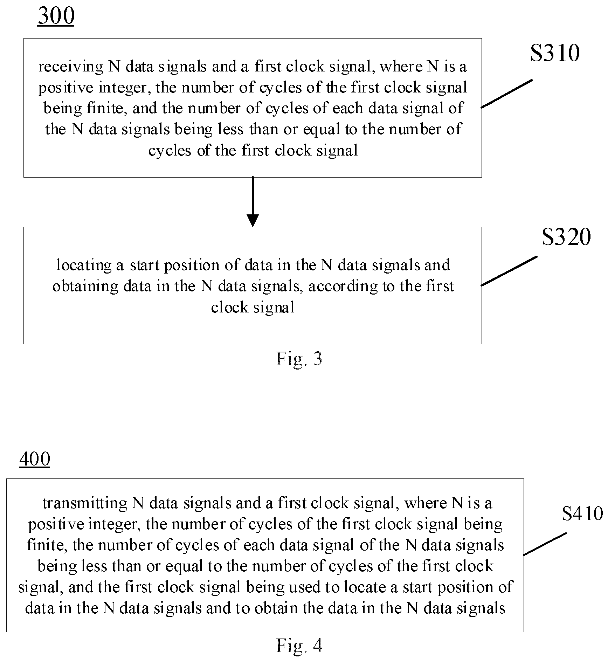

The clock and data alignment is typically trained using a valid flag bit. Chiplet A and chiplet B in Fig. 2 may be chiplet A and chiplet B shown in Fig. 1. The valid flag bit is vld, which takes the value of 1, and is copied three times by a transmitting end into data of 3 bits in length, using first 3 bits of each data channel to carry the valid flag bit. The valid flag bit may indicate beginning of a piece of valid data. According to the valid flag bit, chiplet B may accurately locate the valid data from each data signal. The valid data has an agreed data format, including data length. Thus the chiplet B is able to locate a piece of valid data after discovering the valid flag bit. In Fig. 2, 3 data signals transmitted from chiplet A are aligned. There is a certain phase difference or delay between the 3 data signals received by chiplet B, this delay is difficult to eliminate, and is affected by a variety of factors such as chiplet design, operating environment, temperature, humidity, manufacturing process etc.. As long as the receiving end successfully receives two of the three valid flag bits, it may be judged that the data channels are aligned.

Although there is a certain phase difference between lower two data paths and upper first data path in Fig. 2, but three data paths still have two valid flag bits are aligned, so it is recognized that the three data paths are aligned. This alignment is not an absolute alignment, and it allows for a certain amount of error to exist. However, the clock and data alignment training is included in the complete data link training, and when misalignment between data signals and misalignment between data and clock occur during normal operation of the chip, even if other training in the data link training is not necessary, the complete data link training must be repeated, which has a serious impact on the normal operation of the chip and also increases power consumption.

Based on this, embodiments of the present disclosure provide a method for data transmission, a transmitting end, a receiving end, a chiplet interconnect interface, a chip, and an electronic device, which can achieve real-time clock and data alignment between chiplets without the need for pre-training of clock and data alignment, and provide a feasible solution for removing the clock and data alignment from the data link training.

Embodiments provided in the present disclosure are described below in conjunction with the accompanying drawings.

Fig. 3 illustrates a flowchart of a method for data transmission provided by at least one embodiment of the present disclosure.

The method for data transmission 300 shown in Fig. 3 is applied to a receiving end of a chiplet interconnect interface.

The method for data transmission 300 includes the following steps.

Step S310, receiving N data signals and a first clock signal, where N is a positive integer, the number of cycles of the first clock signal is finite, and the number of cycles of each data signal of the N data signals being less than or equal to the number of cycles of the first clock signal.

Step S320, locating a start position of data in the N data signals and obtaining data in the N data signals, according to the first clock signal.

**In** the present disclosure, the N data signals correspond to N data paths, and the first clock signal corresponds to a clock path. Each data path transmits 1 data signal, and each data signal carries serial data. The first clock signal may be a differential clock signal. For example, N is 2, 3, 4, ......, 16, etc. A value of N is related to bandwidth required for the chiplet interconnect interface, the more the data paths, the greater the bandwidth of data transmission between the chiplets, and the number of data paths may be set according to requirements.

Data carried by each data signal is of a finite length, i.e., the number of cycles carrying data in each data signal is finite. The number of cycles of the N data signals or the number of cycles of each data signal involved in embodiments of the present disclosure refers to the number of cycles carrying valid data. The number of cycles may also be referred to as a length or a cycle length, and these terms may be interchangeable throughout the present disclosure. It is appreciated that data transmissions between chiplets typically have a fixed data format, i.e., the data length is fixed and equal for each transmission, e.g., the data format specifies that the data length is 128 bits. The number of cycles of the N data signals in the embodiment is equal, i.e. the number of cycles of the N data signals and the number of cycles of each data signal refer to the same number of cycles.

The data in each data signal does not include valid flag bit. The data carried in each data signal may have a predefined data format, such as having a predetermined data length or a predetermined number of cycles. For example, the number of cycles is 8. For ease of description, references to the length or the number of cycles of the data signals in the present disclosure refer to a portion of the data signals that carries valid data, and the data in the data signals also refer to valid data. The data signals in the present disclosure is a square wave, and the square wave may be received continuously, but a portion thereof that carries valid data is a portion of the data signal to be discussed in the present disclosure.

Accordingly, a length of the first clock signal is also finite, which is a length that carries a valid clock cycle, for example, the length is 4 cycles. The valid clock cycle of the first clock signal is, for example, a cycle with clock transitions, each valid clock cycle including 1 rising edge and 1 falling edge of the clock. The first clock signal may also be transmitted in a form of a square wave, and unlike the data signal, the first clock signal in the present disclosure is the square wave when valid, and may be a sustained low level when invalid.

The data in the data signal in the present disclosure do not carry the valid flag bit, but instead use the first clock signal to determine a start position of the data. N data signals have a correspondence with the first clock signal, the correspondence being that a difference in the number of cycles is less than or equal to a predetermined number. For example, the number of cycles of the first clock signal is finite and the number of cycles of the first clock signal is greater than or equal to the number of cycles of each data signal. Preferably, the number of cycles of the first clock signal is equal to the number of cycles of each data signal.

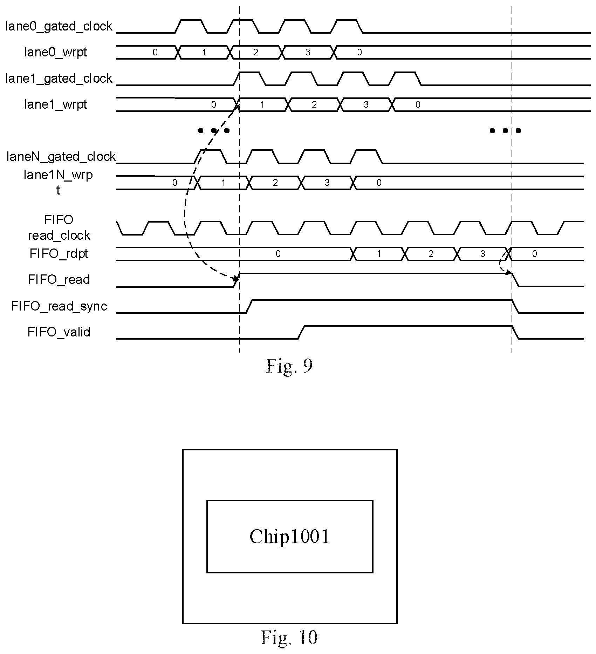

A length of the first clock signal needs to be greater than or equal to a length of each of the data signals, and the lengths of respective data signals are the same. When the length of the first clock signal is greater than the length of the data signals, it can be ensured that the data in the data signals is obtained completely, otherwise data mutilation may occur. For example, it may be considered that it is the first clock signal that determines the start position of the data in the data signal, and the solution of the present disclosure does not involve the valid flag bit, so that a position of a first clock cycle of the first clock signal corresponds to the start position of the data carried in the data signal, for example in Fig. 9. For example, the number of cycles of the N data signals is M, and the number of cycles of N first clock signals is M+X, M is an integer greater than or equal to 2, and X is an integer greater than or equal to 0. X also needs to be less than or equal to a predetermined number. The predetermined number is, for example, 1, 2, 3, 4, etc.. The predetermined number may be adjusted according to requirements, and the smaller the predetermined number is, the shorter the length of the first clock signal is, and thus the smaller the power consumption for transmitting and receiving the first clock signal is.

In executing step S320, due to the correspondence between the first clock signal and the N data signals, data in the data signal may be obtained according to the first clock signal. The data in the data signal refers to valid data carried by the data signal. In the embodiment, opposite to the valid data is invalid data or null data, and the invalid data or the null data may be garbled code, a preset padding value, etc., so that after reading the invalid data or the null data, it is determined that the valid data in the data signal has been received. For example, in the embodiment, the first clock signal is not continuously present but has a limited length, and the first clock signal is used to locate the position of the data in the data signal.

In accordance with the method provided in the embodiment, there is a correspondence between received N data signals and the first clock signal, so that the first clock signal may be used to determine and obtain the data in the data signal, there is no need for the data to include the valid flag bit, and there is no need for pre-training in clock and data alignment, and the effect of the clock and data alignment can be obtained in real time.

In some embodiments, performing step S320 may include: according to the first clock signals, locating a start position of data in the N data signals, and obtaining N second clock signals, the N second clock signals corresponding to the N data signals, respectively; according to the N second clock signals, locating the start position of the data in each of the N data signals, respectively, and converting the data in the N data signals from serial data to parallel data, respectively, each second clock signal of the N second clock signals having the same number of cycles as the first clock signal.

For example, the first clock signal is expanded into the N second clock signals without changing frequency and the number of cycles (or length) of clock signals. There may be different phase differences between the N second clock signals, such as adjusting a different phase for each of the N second clock signals when obtaining the N second clock signals, such as a plurality of lanes of clock signals in Fig. 9 having different phase differences. The phase difference in the embodiment may be understood as a delay. The data in the N data signals is then localized according to each clock signal of the N second clock signals, for example to locate a start position of the data.

For example, the data in each of the N data signals is converted from serial to parallel by sampling the N data signals using the N second clock signals correspondingly, each of the second clock signals is used for sampling a corresponding 1 data signal. For example, data sampling is performed once at each clock falling edge or at each clock rising edge, thereby obtaining the data in the data signals.

**In** some embodiments, after obtaining the data in the N data signals, the method for data transmission further includes: storing the data in the N data signals to a buffer memory according to the N second clock signals, correspondingly.

Optionally, the data in each of the data signals may be stored to a portion of a storage area in the buffer memory, or may be stored to 1 buffer memory individually. That is, the number of buffer memories may be 1 or N. For example, after deserializing the data in the data signal, several data blocks are obtained, each data block may be stored in a storage space of the buffer memory, for example, in an entry, in a section of address space. Data in different data signals may be stored in different buffer memories, which is easier to implement and facilitates subsequent processing.

When storing the data in the N data signals to different areas of a buffer memory, the buffer memory reserves a fixed storage area for the data in each data signal. For example, the buffer memory is divided into N storage areas, and each storage area includes a plurality of storage spaces.

In some embodiments, storing the data in the N data signals to the buffer memory includes: accessing, according to the N second clock signals, a write pointer of the buffer memory to store the data in the N data signals to the buffer memory, respectively.

For example, when there is only one buffer memory, the N second clock signals are utilized to access write pointers of different storage areas to store the data in the N data signals to different storage areas. The buffer memory may include N storage areas, each storage area has its own write pointer and read pointer.

As another example, when there are N buffer memories, N second clock signals are utilized to access write pointers of different buffer memories to store the data in the N data signals to the different buffer memories.

For example, the buffer memory writes data by accessing the write pointer, so that the second clock signal may be utilized to count the write pointer, e.g., each rising edge or each falling edge of the second clock signal causes the value of the write pointer to be added by 1, i.e., to point to the next storage space. Each write pointer cyclically points to several storage spaces in a storage area. For example, the write pointer jumps from larger to smaller or smaller to larger according to an address of a storage space.

In some embodiments, the method for data transmission further includes: reading the data in the N data signals from the buffer memory according to a third clock signal, in which the third clock signal is a local clock signal of the receiving end. The data in the N data signals may be read using the same third clock signal.

A way of reading data from the buffer memory is similar to a way of storing data. For example, a read pointer of the buffer memory may be accessed to read the data in the N data signals according to the third clock signal. For example, when there are N buffer memories, N buffer memories may be accessed according to the third clock signal to obtain the data in the N data signals. After the read pointer of the buffer memory is accessed, the value of the read pointer is also added 1 and points to next storage space. Optionally, the number of values of the read pointer is limited or a range of values is limited, and the value of the read pointer jumps cyclically within the range of values. For example, the read pointers of the N buffer memories are accessed as well as counted according to the rising edge or falling edge in the third clock signal, so that the data in the N data signals can be read out simultaneously.

Optionally, the data in the N data signals may be read out simultaneously after the data in the N data signals are stored in the buffer memory. For example, the data in the N data signals may be read out simultaneously using a third clock signal after it has been determined that all of the data in the N data signals have been stored to the buffer memory correspondingly. The lengths of the data in the N data signals and as well as the number of data blocks are specified to be the same, and the data blocks may be stored in several similar storage spaces in different buffer memories, or the data blocks may be stored in the same order. Thus, the same signal can be used to trigger the reading of the data, so that the data in the different buffer memories or in the different storage areas can be read simultaneously and in an orderly manner. The third clock signal may also be a clock signal generated according to the first clock signal, such as generating a third clock signal whose length exceeds that of the first clock signal according to the frequency of the first clock signal, or delaying the first clock signal to obtain the third clock signal.

With the method in the embodiment, the data in the N data signals can be considered "aligned" when stored in the buffer memory, and then the same third clock signal is further used to read the data in the buffer memory, which is also "aligned", even if the N data signals are not aligned during transmission (e.g., the difference between different data signals exceeds 2 cycles), finally obtained data is still aligned, and therefore there is no need to re-train the data link in case of a misalignment of the data channels in the normal operation state of the chiplet. Further, with the method in the embodiment, the data alignment can be accomplished directly through the corresponding transmission/reception of the N data signals and the first clock signal without the need for the training of clock and data alignment in the training phase of the data link, and because there is no need for the training of clock and data alignment and repeated training of the data link, it not only reduces the complexity of the design but also reduces the power consumption.

In some embodiments, the method for data transmission further includes: stopping the reading from the N buffer memories after at least one null data has been read from the buffer memory.

In the embodiment, the length of the data in each data signal is finite, such that after the null data has been read from the buffer memory, data reading is considered to be complete and accessing to the buffer memory is stopped.

The method for data transmission at the receiving end of the chiplet interconnect interface is described above in connection with the accompanying drawings, and the method for data transmission at a transmitting end of the chiplet interconnect interface is described below in connection with Fig. 4.

At least one embodiment of the present disclosure further provides a method for data transmission, applied to the transmitting end, including: transmitting N data signals and a first clock signal, where N is a positive integer, there is a correspondence between the N data signals and the first clock signal, the correspondence being that a difference in the number of cycles is less than or equal to a predetermined number, and the first clock signal is used to obtain data in the N data signals.

Fig. 4 illustrates a flowchart of another method for data transmission provided by at least one embodiment of the present disclosure. The method for data transmission 400 is applicable to the transmitting end.

In Fig. 4, the method for data transmission 400 includes the following steps:
Step S410, transmitting N data signals and a first clock signal, where N is a positive integer, the number of cycles of the first clock signal being finite, the number of cycles of each data signal of the N data signals being less than or equal to the number of cycles of the first clock signal, and the first clock signal being used to locate a start position of data in the N data signals and to obtain the data in the N data signals.

Definitions of the N data signals and the first clock signal may refer to relevant description in Fig. 3, which is not repeated here. In the embodiment, not any clock signal having the same number of cycles as the number of cycles of the data signals may be used to obtain the data in the data signals. There is a correspondence between the first clock signal and the N data signals, e.g., the first clock signal and the N data signals are transmitted aligned or simultaneously, so that a first edge of the first clock signal is aligned with a first cycle of the N data signals carrying valid data. For the receiving end, the correspondence is not changed after design or data deskew training.

Optionally, the number of cycles of each data signal of the N data signals is M, the number of cycles of the first clock signal is M+X, where M is an integer greater than or equal to 2, and X is an integer greater than or equal to 0.

Each data signal of the N data signals has the same number of cycles. The number of cycles of the first clock signal is greater than or equal to the number of cycles of the data signals, so that the data in the data signal can be completely obtained. For example, M is equal to 6, and X is equal to 1 or 2. Optionally, the difference between the number of cycles of the first clock signal and the number of cycles of the data signal is less than a preset value. For example, the preset value is 4 or 3. When the number of cycles of the first clock signal does not exceed the number of cycles of the data signal by too much, power for receiving the first clock signal can be saved.

In further embodiments, when executing step S410, N data signals and the first clock signal may be transmitted simultaneously; or, the first clock signal may be transmitted first, and then the N data signals may be transmitted after a preset cycle length.

For example, when the number of cycles of the first clock signal is equal to or greater than the number of cycles of the data signal, the corresponding data signals and the first clock signal may be transmitted simultaneously. When the number of cycles of the first clock signal is greater than the number of cycles of the data signal, the first clock signal may be transmitted first, and then the data signal may be transmitted, so as to ensure that the first clock signal can "cover" all the cycles of the data signal.

Optionally, the transmitting of the first clock signal is related to the transmitting of the data signal, for example, the transmitting of the data signal determines the transmitting of the first clock signal. For example, the first clock signal may be set to be transmitted simultaneously with the transmission of the N data signals, so that the start position of the first clock signal is aligned with the start position of the data in the N data signals.

In some embodiments, the method for data transmission further includes: stopping transmitting the first clock signal when or after the N data signals stop being transmitted.

For example, each data signal stopping transmitting may also be understood as each data signal transmitting being completed, and when all the data signals stop transmitting, it may be selected to either stop transmitting the first clock signal or to allow the first clock signal to continue transmitting for a few more cycles. This can both ensure that the number of cycles of the first clock signal is greater than or equal to the number of cycles of the data signals, and also stop continuing subsequent clock cycles that will not be used, i.e., stop transmitting the clock signal when the data signal is not being transmitted, so that the power consumption caused by transmitting the clock signals can be reduced.

At least one embodiment of the present disclosure further provides a chiplet interconnect interface configured to execute the method as described in any of the first method embodiments described above. For example, there is a processing module in the chiplet interconnect interface that may implement the method as described in the method embodiment above.

At least one embodiment of the present disclosure further provides a chiplet interconnect interface configured to perform the method as described in any of the second method embodiments described above. For example, there is a processing module in the chiplet interconnect interface that may implement the method as described in the method embodiment described above.

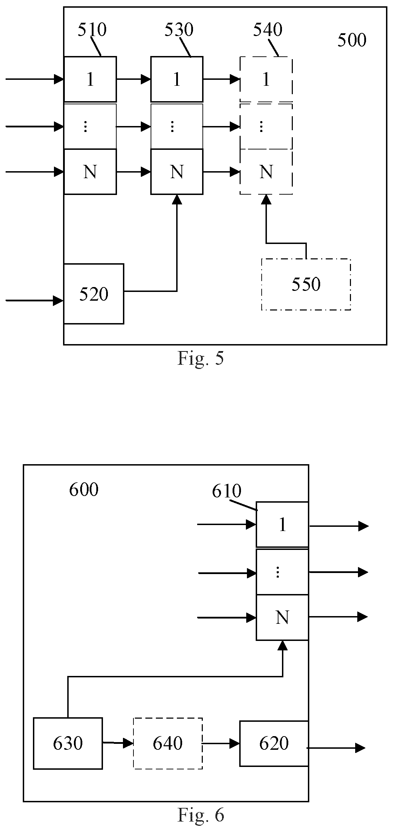

Fig. 5 illustrates a schematic diagram of a receiving end provided by at least one embodiment of the present disclosure. The receiving end 500 in the embodiment may execute the method for data transmission described with reference to Fig. 3, and its execution mode may be referred to the related description of Fig. 3.

In Fig. 5, the receiving end 500 includes N data ports 510, a clock port 520, and a data processing module 530. The data processing module 530 is respectively connected to the N data ports 510, and the data processing module 530 is connected to the clock port 520. The receiving end 500 is connected to N data paths and 1 clock path, each data path is connected to a data port.

The N data ports 510 correspondingly receive N data signals. N is a positive integer. The N clock ports 520 correspondingly receive N first clock signals. There is a correspondence between the N data signals and the first clock signals, the correspondence being that the difference in the number of cycles is less than or equal to a predetermined number. For example, the number of cycles of the first clock signal is finite, and the number of cycles of each data signal of the N data signals is less than or equal to the number of cycles of the first clock signal. The data processing module 530 locates a start position of the data in the N data signals and obtains the data in the N data signals, according to the first clock signal.

Optionally, the receiving end further includes: a clock acquisition module, connected to the clock port and the data processing module, and the clock acquisition module is configured to obtain N second clock signals according to the N first clock signals, and transmit the N second clock signals to the data processing module.

In this implementation, the clock port is not directly connected to the data processing module, but is connected to the data processing module via the clock acquisition module. The clock acquisition module may extend or delay the first clock signal to obtain the N second clock signals. In an implementation without the clock acquisition module, the first clock signal may be delayed and extended by circuit design, for example by using length of connecting wires to adjust a phase difference between the second clock signals.

Further optionally, the data processing module is configured to convert the data in the N data signals from serial data to parallel data, respectively, according to the N second clock signals. Each second clock signal of the N second clock signals has the same number of cycles as the first clock signal.

For example, in the case where the number of data processing modules is N, each data processing module is connected to 1 second clock signal, and is responsible for serial-parallel conversion of data of the corresponding 1 data signal. In the case where the number of data processing modules is 1, the data processing module may include a plurality of processing units, each processing unit connects to 1 second clock signal and is responsible for the serial-parallel conversion of data of the corresponding 1 data signal.

For example, the data processing module 530 includes a serial-parallel converter, and the serial-parallel converter may convert serial data to parallel data. Another example is that the data processing module 530 includes a sampler and a demultiplexer, the sampler may sample the data in the data signal according to the second clock signal to obtain the data in the data signal, and then sampled data is converted into parallel data through the demultiplexer.

In some embodiments, the receiving end further includes: a buffer memory, connected to the data processing module, and the buffer memory is configured to store the data in the N data signals. For example, the number of buffer memories is 1 or N.

For example, the receiving end 500 further includes N buffer memories 540, the N buffer memories 540 are represented by a dashed box in the figure. The N buffer memories 540 respectively store the data in the N data signals.

In some embodiments, the data processing module is further configured to access write pointers of the N buffer memories according to the N second clock signals, correspondingly, to store the data in the N data signals.

For example, the buffer memory 540 writes data by accessing the write pointer, so that the write pointers can be counted by using the second clock signal, for example, each rising edge or each falling edge of the second clock signals causes a value of the write pointer to be added by 1, i.e., to point to next storage space. Because a cycle of the second clock signal corresponds to a cycle of a corresponding data signal, by controlling counting of the write pointers according to the second clock signal, it is possible to completely write the data in the data signal to the N buffer memories 540.

Optionally, each buffer memory of the N buffer memories 540 is an asynchronous FIFO memory.

In some embodiments, the receiving end further includes: a data reading module, connected to the buffer memories, and the data reading module is configured to read out the data in the N data signals from the buffer memory according to a third clock signal, in which the third clock signal is a local clock signal.

For example, the receiving end 500 further includes a data reading module 550. The number of the data reading module 550 is 1. The data reading module 550 is connected to the N buffer memories 540. The data reading module 550 may read out data in the N data signals from the N buffer memories 540 simultaneously according to the third clock signal. It should be noted that the data reading module 550 needs to wait for all of the N buffer memories 540 to write data before reading the data.

In some embodiments, the data reading module is further configured to access a read pointer of the buffer memory to read the data in the N data signals according to the third clock signal.

For example, the data reading module 550 may simultaneously access the respective read pointers of the N buffer memories 540 according to the third clock signal. For example, the read pointers of the N buffer memories 540 are accessed as well as counted according to a rising edge or a falling edge in each cycle of the third clock signal to read out the data in the N data signals simultaneously.

In some embodiments, the data reading module is further configured to stop data reading from the buffer memory after at least one null data has been read from the buffer memory.

For example, the data reading module 550 is configured to stop data reading of the N buffer memories 540 by determining that the data has been read in its entirety once the null data has been read from the N buffer memories 540. For example, the data reading module 550 reads the data in the N buffer memories 540 according to the local clock signal, and because the local clock signal always exists, the data reading module 550 needs to determine whether the data has been read all successfully through the null data. As another example, the data reading module 550 reads the data in the N buffer memories 540 according to the first clock signal or the second clock signal, and a length of a valid clock cycle of the first clock signal and a length of a valid clock cycle of the second clock signal are finite, so that the reading of the data in the N buffer memories 540 may be automatically stopped after experiencing all valid clock cycles.

In some embodiments, the receiving end further includes: a local clock, and the local clock is configured to generate a local clock signal.

Fig. 6 illustrates a schematic diagram of a transmitting end provided by at least one embodiment of the present disclosure. The transmitting end 600 in Fig. 6 may execute the method as shown in Fig. 4, the execution of which may be described in relation to Fig. 4.

In Fig. 6, the transmitting end 600 includes N data ports 610, a clock port 620, and a local clock 630. The N data ports 610 correspondingly transmit N data signals, where N is a positive integer. The clock port 620 transmits a first clock signal. The local clock 630 generates the first clock signal. The local clock 630 is connected to the clock port 620 and the N data ports 610. There is a correspondence between the N data signals and the first clock signal, and the correspondence is that a difference in the number of cycles is less than or equal to a predetermined number, such as the number of cycles of the first clock signal is finite, and the number of cycles of each data signal of the N data signals is less than or equal to the number of cycles of the first clock signal. And the first clock signal is used to locate a start position of the data in the N data signals and to obtain the data in the N data signals. Optionally, the local clock 630 may be a phase-locked loop.

In some embodiments, the number of cycles of the N data signals is M, the number of cycles of the N first clock signals is M+X, M is an integer greater than or equal to 2, and X is an integer greater than or equal to 0.

In some embodiments, the N data ports and the clock port are configured to transmit one data signal of the N data signals and a corresponding one of the first clock signal simultaneously; or, the clock port is configured to transmit the first clock signals first, and the N data ports are configured to transmit the N data signals after a preset interval after the first clock signals are transmitted.

Different transmitting methods may be selected. For example, in the case where the data signals and the first clock signals have an equal number of cycles, they have to be transmitted simultaneously. In the case where the number of cycles of the first clock signal is greater than the number of cycles of the data signal, the first clock signal and the data signal may be transmitted simultaneously, or the first clock signal may be transmitted first followed by the data signal. It should be noted that because the first clock signal may be used to locate the data in the data signal, in the case of transmitting the first clock signal first, it is necessary to determine a cycle difference or a phase difference between transmitting the first clock signal and transmitting the data signal, so as to ensure that the receiving end can utilize the first clock signal to realize the localization of the data.

In some embodiments, the chiplet interconnect interface further includes: a clock switch connected to the local clock and the clock port, and the clock switch is configured to disconnect a connection between the local clock and the clock port when the N data signals stop being transmitted or after one cycle of stopping transmitting the N data signals. Optionally, the clock switch may disconnect the connection between the local clock and the clock port after 2 cycles or a plurality of cycles following the cessation of the transmission of the N data signals. Optionally, the clock switch may also control the transmission of the first clock signal, e.g., when the local clock outputs a clock signal that continuously exist, the clock switch determines whether to transmit the first clock signal, when to transmit the first clock signal, and when to stop transmitting the first clock signal.

For example, a clock switch 640 is illustrated with a dashed box in Fig. 6. The clock switch 640 is connected to the local clock 630, and the clock switch 640 is further connected to the clock port 620. The clock switch 640 may control the transmission or cessation of transmission of the first clock signal from the clock port 620.

Optionally, the N clock switches 640 may be implemented with a clock gating circuit or switch.

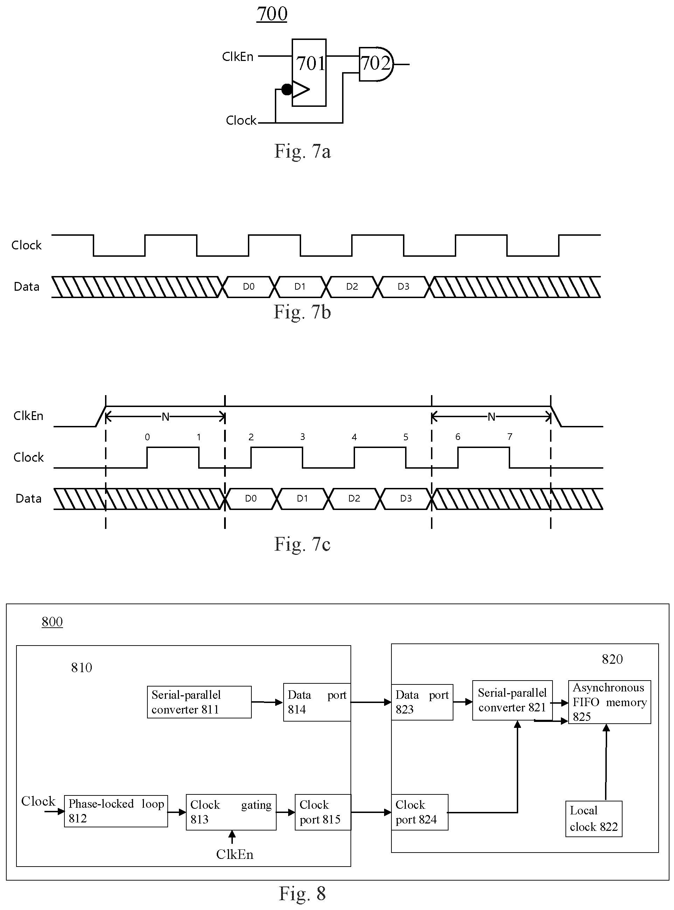

Fig. 7a illustrates a schematic diagram of a structure of a clock switch provided by at least one embodiment of the present disclosure.

In Fig. 7a, a clock switch 700 is a clock gating circuit based on a latch. The clock switch 700 includes a latch 701 and an AND gate 702. An input of the latch 701 is an enable signal ClkEn of a clock and a clock signal Clock, and an input of the AND gate 702 is a clock signal Clock and an output of the latch 701. The clock switch 700 may turn off the clock signal when the enable signal ClkEn of the clock is low inactive, i.e., the first clock signal is a few clock cycles when the enable signal ClkEn of the clock is high active.

Fig. 7b illustrates a schematic diagram of a first clock signal and a data signal provided by at least one embodiment of the present disclosure.

Fig. 7b illustrates a schematic diagram of the data signal and the first clock signal when the clock switch is not used. Clock in Fig. 7b is the clock signal and Data is the data signal. The data signal in Fig. 7b carries four valid data, D0, D1, D2, and D3, and the remaining diagonal portion is invalid data. The first clock signal in Fig. 7b is then persistent.

Fig. 7c illustrates a schematic diagram of another embodiment of a first clock signal and a data signal provided by at least one embodiment of the present disclosure.

Fig. 7c illustrates a schematic diagram of the data signal and the first clock signal when the clock switch is used. ClkEn in Fig. 7c is an enable signal of the clock, Clock is the clock signal, and Data is the data signal. The data signal in Fig. 7c carries four valid data, D0, D1, D2, and D3, and the remaining diagonal portion is invalid data. The first clock signal in Fig. 7b is present in correspondence with the valid data.

At least one embodiment of the present disclosure further provides a chip including a plurality of chiplets, any two chiplets of the plurality of chiplets are connected via a chiplet interconnect interface as described in any of the above-described first device embodiments and a chiplet interconnect interface as described in any of the above-described second device embodiments.

At least one embodiment of the present disclosure further provides a chip including a plurality of chiplets, any two chiplets of the plurality of chiplets are connected via a chiplet interconnect interface as described in any of the third device embodiments described above and a chiplet interconnect interface as described in any of the fourth device embodiments described above.

Fig. 8 illustrates a schematic diagram of a chip provided by at least one embodiment of the present disclosure.

In Fig. 8, the chip 800 includes a chiplet 810 and a chiplet 820. The chiplet 810 is the transmitting side and the chiplet 820 is the receiving side. Only the chiplet interconnect interfaces of the chiplet 810 and chiplet 820 are shown in Fig. 8. The chiplet 810 includes a serial-parallel converter 811, a phase-locked loop 812, a clock gating 813, a data port 814, and a clock port 815. The chiplet 820 includes a serial-parallel converter 821, a local clock 822, a data port 823, a clock port 824, and an asynchronous FIFO memory 825.

The data port 814 and the data port 823 are connected via a data path. The clock port 815 and the clock port 824 are connected via a clock path. Only one data port is shown in Fig. 8 as an illustration, and it will be appreciated that at least one data port is included in actual design.

The serial-parallel converter 811 receives parallel data and converts it to serial data, and serial-parallel converter 821 converts the serial data to parallel data. The input to the phase-locked loop 812 is a clock signal Clock, which may output a clock signal to the clock gating 813 and the serial-parallel converter 811 (only 1 clock signal is shown to be output in the figure). The other input to the clock gating 813 is the clock enable signal ClkEn.

The clock port 824 sends the received clock signal to the serial-parallel converter 821, which inputs 1 clock signal into the asynchronous FIFO memory 825, the clock signal controls the count of write pointers of the asynchronous FIFO memory 825. The local clock 822 inputs another clock signal into the asynchronous FIFO memory 825, and the clock signal controls the count of the read pointers of the asynchronous FIFO memory 825.

Optionally, the chiplet 820 may include a plurality of serial-parallel converters 821 and a plurality of asynchronous FIFO memories 825. The chiplet 820 may further include a clock acquisition module connected to the clock port 824 and the plurality of serial-parallel converters 821. The clock acquisition module may expand 1 clock signal received from the clock port 824 into a plurality of clock signals, with the plurality of clock signals corresponding to inputs into the plurality of serial-parallel converters 821. Correspondingly, the plurality of asynchronous FIFO memories 825 are connected to the plurality of serial-parallel converters 821, with each serial-parallel converter 821 inputting 1 clock signal into the corresponding 1 asynchronous FIFO memory 825. The local clock 822 is connected to the plurality of asynchronous FIFO memories 825 and provides local clock signals to the plurality of asynchronous FIFO memories 825.

Fig. 9 illustrates a timing diagram of a method for data transmission after chiplet interconnection provided by at least one embodiment of the present disclosure.

The chiplet interconnect in Fig. 9 may be used in an interconnection method as shown in Fig. 8. In Fig. 9, lane indicates a control signal from a data path, FIFO indicates a control signal of a buffer memory, laneY_gated_clock indicates a first clock signal of a data path Y, with Y being 0-N, and laneY_wrpt indicates a write pointer signal to the buffer memory. FIFO_read_clock is a second clock signal that is a continuously present clock signal. FIFO_rdpt is a read pointer signal of the buffer memory. FIFO_read is a read enable signal. FIFO_read_sync is a synchronous read signal for the buffer memory. FIFO_valid is a valid signal of the buffer memory.

The first clock signal of each lane and the read pointer signal are corresponding, which indicates that the data in the data signal is written to the buffer memory when there is a rising edge or falling edge of the first clock signal. After all the buffer memories have data written, the read pointer and the write pointer of each buffer memory do not take equal values, and then the read enable signal FIFO_read is pulled high to become effective. Then the read enable signal FIFO_read is synchronized to the FIFO_read_clock signal, and the readout of data begins in the next cycle (FIFO_valid becomes active high on the next cycle). The values 0, 1, 2 and 3 of the pointer signals in the figure are the values indicating the pointer, which reads the data of the corresponding value. For example, the value of FIFO_rdpt is 0, and it reads the data corresponding to the value of laneY_wrpt of 0. Therefore, when the value of FIFO_rdpt is 1 to 3, it reads the data corresponding to the positions 1 to 3 of the write pointer value in each lane.

After the transmitting end stops transmitting data signals, laneY_gated_clock is turned off or disconnected, and because FIFO_read_clock is still valid, it will continue to read data, but it will read null data. As soon as null data is read, the read enable signal is pulled low to become invalid, waiting for the next data signal to be transmitted.

At least one embodiment of the present disclosure provides an electronic device including a chip as described in the above embodiment.

Fig. 10 illustrates a schematic diagram of an electronic device provided by at least one embodiment of the present disclosure.

The electronic device 1000 includes a chip 1001. The chip 1001 is, for example, the chip 800 shown in Fig. 8. The electronic device 1000 may be any device with computing functions, for example, a computer, a server, a smartphone, a tablet computer, and the like, and the embodiments of the present disclosure are not limited thereto.

The above describes the basic principles of the present application in combination with specific embodiments, however, it should be noted that the advantages, advantages, effects, etc. mentioned in the present application are only examples and not limitations, and it cannot be considered that these advantages, effects, etc. are necessary for each embodiment of the present application. Furthermore, the specific details disclosed above are for the purpose of exemplification only and for the purpose of facilitating understanding, and are not a limitation, and the above details do not limit the present application as having to be realized by using the above specific details.

Notably, the flowcharts of the steps in this application and the above description of the method are intended to be illustrative only and are not intended to require or imply that the steps of the various embodiments must be carried out in the order given, and that certain steps may be carried out in parallel, independently of each other, or in some other suitable order. Furthermore, words such as "secondly", "then", "next", etc. are not intended to limit the order of the steps; they are used only to guide the reader through the description of the methods.

The block diagrams of the component, the apparatus, the device, and the system involved in this application are intended to be illustrative only and are not intended to require or imply that they must be connected, arranged, or configured in the manner illustrated in the block diagrams. It is also noted that in the apparatus and the method of the present application, each component or each step may be decomposed and/or recombined. These decompositions and/or recombinations should be regarded as equivalent embodiments of the present application.

There are the following points to be clarified: (1) The accompanying drawings of the embodiments of the present disclosure relate only to the structures involved with the embodiments of the present disclosure, and other structures may be referred to the usual design. (2) The embodiments of the present disclosure and the features in the embodiments may be combined with each other to obtain new embodiments, provided that there is no conflict. The foregoing is only an exemplary embodiment of the present disclosure and is not intended to limit the scope of protection of the present disclosure, which is determined by the appended claims.

## Claims

1. A method for data transmission, applied to a receiving end, comprising:
receiving N data signals and a first clock signal, wherein the number of cycles of the first clock signal is finite, the number of cycles of each data signal of the N data signals is less than or equal to the number of cycles of the first clock signal, and N is a positive integer; and
locating a start position of data in the N data signals and obtaining the data in the N data signals, according to the first clock signal.

2. The method according to claim 1, wherein the locating a start position of data in the N data signals and obtaining the data in the N data signals, according to the first clock signal, comprises:
obtaining N second clock signals according to the first clock signal, wherein the N second clock signals correspond to the N data signals respectively; and
respectively locating a start position of data in each data signal of the N data signals, and respectively converting the data in the N data signals from serial data to parallel data, according to the N second clock signals,
wherein each second clock signal of the N second clock signals has the same number of cycles as the first clock signal.

3. The method according to claim 2, wherein, after obtaining data in the N data signals, the method further comprises:
storing the data in the N data signals to a buffer memory according to the N second clock signals, correspondingly.

4. The method according to claim 3, further comprising:
reading the data in the N data signals from the buffer memory according to a third clock signal,
wherein the third clock signal is a local clock signal of the receiving end.

5. The method according to claim 4, wherein the reading the data in the N data signals from the buffer memory according to a third clock signal, comprises:
accessing a read pointer of the buffer memory to read the data in the N data signals according to the third clock signal.

6. The method according to claim 3, wherein the storing the data in the N data signals to a buffer memory according to the N second clock signals, correspondingly, comprises:
accessing a write pointer of the buffer memory to store the data in the N data signals to the buffer memory, respectively, according to the N second clock signals.

7. The method according to claim 5, further comprising:
stopping reading from the buffer memory after at least one null data has been read from the buffer memory.

8. The method according to any one of claims 1-7, wherein the number of cycles of each data signal of the N data signals is M, the number of cycles of the first clock signal is M+X, M is an integer greater than or equal to 2, and X is an integer greater than or equal to 0.

9. A method for data transmission, applied to a transmitting end, comprising:
transmitting N data signals and a first clock signal,
wherein N is a positive integer, the number of cycles of the first clock signal is finite, the number of cycles of each data signal of the N data signals is less than or equal to the number of cycles of the first clock signal, and the first clock signal is used to locate a start position of data in the N data signals and to obtain the data in the N data signals.

10. The method according to claim 9, wherein the transmitting the N data signals and the first clock signal, comprises:
transmitting the N data signals and the first clock signal simultaneously; or
transmitting the first clock signal first, and then transmitting the N data signals after a preset interval.

11. The method according to claim 9, further comprising:
stopping transmitting the first clock signal when or after the N data signals stop being transmitted.

12. The method according to claim 9, wherein the number of cycles of each data signal of the N data signals is M, the number of cycles of the first clock signal is M+X, M is an integer greater than or equal to 2, and X is an integer greater than or equal to 0.

13. A receiving end, applied to a chiplet interconnect interface, comprising:
N data ports, configured to receive N data signals, where N is a positive integer;
a clock port, configured to receive a first clock signal, wherein the number of cycles of the first clock signal is finite, and the number of cycles of each data signal of the N data signals is less than or equal to the number of cycles of the first clock signal; and
a data processing module, connected to the N data ports and the clock port, configured to locate a start position of data in the N data signals and obtain data in the N data signals according to the first clock signal.

14. The receiving end according to claim 13, further comprising:
a clock acquisition module, connected to the clock port and the data processing module, configured to obtain N second clock signals according to the first clock signal, and transmit the N second clock signals to the data processing module; and
the data processing module is configured to convert the data in the N data signals from serial data to parallel data, respectively, according to the N second clock signals,
wherein each second clock signal of the N second clock signals has same number of cycles as the first clock signal.

15. The receiving end according to claim 14, further comprising:
a buffer memory, connected to the data processing module, configured to store the data in the N data signals.

16. The receiving end according to claim 15, wherein the data processing module is further configured to access a write pointer of the buffer memory to store the data in the N data signals to the buffer memory according to the N second clock signals.

17. The receiving end according to claim 15, further comprising:
a data reading module, connected to the buffer memory, configured to read out the data in the N data signals from the buffer memory according to a third clock signal, wherein the third clock signal is a local clock signal of the receiving end.

18. The receiving end according to claim 17, wherein the data reading module is further configured to access a read pointer of the buffer memory to read the data in the N data signals according to the third clock signal.

19. The receiving end according to claim 17, wherein the data reading module is further configured to stop data reading from the buffer memory after at least one null data has been read from the buffer memory.

20. The receiving end according to claim 15, wherein the buffer memory is an asynchronous FIFO memory.

21. The receiving end according to claim 13, wherein the receiving end further comprises:
a local clock, configured to generate a local clock signal.

22. The receiving end according to claim 13, wherein the number of cycles of each data signal of the N data signals is M, the number of cycles of the first clock signal is M+X, M is an integer greater than or equal to 2, and X is an integer greater than or equal to 0.

23. A transmitting end, applied to a chiplet interconnect interface, comprising:
N data ports, configured to correspondingly transmit N data signals, where N is a positive integer;
a clock port, configured to transmit a first clock signal; and
a local clock, connected to the clock port and the N data ports, configured to generate the first clock signal,
wherein the number of cycles of the first clock signal is finite, the number of cycles of each data signal of the N data signals is less than or equal to the number of cycles of the first clock signal, and the first clock signal is used to locate a start position of data in the N data signals and to obtain the data in the N data signals.

24. The transmitting end according to claim 23, wherein the N data ports and the clock port are configured to transmit the N data signals and the first clock signal respectively and simultaneously; or, the clock port is configured to transmit the first clock signal first, and the N data ports are configured to transmit the N data signals after a preset interval after the first clock signal is transmitted.

25. The transmitting end according to claim 23, further comprising:
a clock switch, connected to the local clock and to the clock port, configured to disconnect a connection between the local clock and the clock port when the N data signals stop being transmitted or after one cycle of stopping transmitting the N data signals.

26. The transmitting end according to claim 23, wherein the number of cycles of each data signal of the N data signals is M, the number of cycles of the first clock signal is M+X, M is an integer greater than or equal to 2, and X is an integer greater than or equal to 0.

27. A chiplet interconnect interface, comprising the receiving end according to any one of claims 13-22.

28. A chiplet interconnect interface, comprising the transmitting end according to any one of claims 23-26.

29. A chip, comprising a plurality of chiplets, wherein any two chiplets of the plurality of chiplets are connected via the chiplet interconnect interface according to claim 27 and the chiplet interconnect interface according to claim 28.

30. An electronic device, comprising the chip according to claim 29.
